# EUROPÄISCHE PATENTSCHRIFT

(11) **EP 1 008 964 B1**
(45) Veröffentlichungstag und Bekanntmachung des Hinweises auf die Patenterteilung: **17.10.2007**
(21) Anmeldenummer: 99124274.4
(22) Anmeldetag: 04.12.1999
(51) Int. Cl.: G07C 7/00

(54) **Anordnung zum Betätigen eines der Eingabe-/Ausgabeöffnung eines Lese-/Schreibaggregates für Datenkarten zugeordneten Schliesselementes**
Device for actuating a closure element of an input/output opening of a read/write unit for data cards
Dispositif pour actionner un élément de fermeture d'une ouverture d'entrée/sortie d'une unité de lecture/écriture pour cartes de données

(30) Priorität: 11.12.1998 DE 29822141 U
(43) Veröffentlichungstag der Anmeldung: 14.06.2000
(73) Patentinhaber: SIEMENS AKTIENGESELLSCHAFT, 80333 München (DE)
(72) Erfinder: Burkart, Harald, 78054 Villingen-Schwenningen (DE)

(56) Entgegenhaltungen:
- EP-A- 0 363 992
- EP-A- 0 696 776
- US-A- 4 724 310
- PATENT ABSTRACTS OF JAPAN Bd. 0152, Nr. 10 (P-1208), 29. Mai 1991 (1991-05-29) & JP 3 058184 A (TAMURA ELECTRIC WORKS LTD), 13. März 1991 (1991-03-13)
- PATENT ABSTRACTS OF JAPAN Bd. 0160, Nr. 50 (P-1308), 7. Februar 1992 (1992-02-07) & JP 3 250388 A (ANRITSU CORP), 8. November 1991 (1991-11-08)

## Beschreibung

Die Erfindung betrifft eine Anordnung zum Betätigen eines der Eingabe-/Ausgabeöffnung eines Lese-/Schreibaggregates für Datenkarten zugeordneten Schließelementes nach dem Oberbegriff des Anspruchs 1.

Eine solche Anordnung ist aus der US-A-4 724 310 bekannt, in der ein Schreib-Lese-Gerät für eine IC-Karte beschrieben wird. Als Schließeinrichtung sind zwei Haken vorgesehen, die in einer Schließposition einschnappen, nachdem durch das Einschieben der IC-Karte ein Hebel-Feder-Mechanismus ausgelöst wird.

Bei Fahrtschreibern ist es wegen erheblicher Manipulationsgefahr im Zusammenhang mit den dem Fahrpersonal zugeordneten Datenkarten zwingend erforderlich Maßnahmen zu ergreifen, die einen direkten oder indirekten Zugang in das betreffende Lese-/Schreibaggregat unmöglich machen. Eine dieser Maßnahmen ist der selbsttätige Transport der Datenkarten von der Eingabe-/Entnahmeposition in die Lese-/Schreibposition. Eine weitere Maßnahme besteht darin, der Eingabe-/Ausgabeöffnung des Lese-/Schreibaggregates ein Schließelement zuzuordnen. Eine dritte Maßnahme muss dann folgerichtig eine getriebliche Rückkopplung zwischen einer transportierten Datenkarte, beziehungsweise einem der Datenkarte zugeordneten Träger und dem Schließelement vorsehen. Dabei ist zu beachten, dass hinsichtlich der Realisierung dieser Maßnahmen in einem Fahrtschreiber, dessen Gehäuse vorzugsweise den Abmessungen eines Autoradiofachs entsprechen, für das betreffende Schreib-/Leseaggregat lediglich eine geringe Bauhöhe und nur eine einen relativ kurzen Transportweg gestattende Bautiefe zur Verfügung stehen.

Die der Erfindung zugrunde liegende Aufgabe besteht nun darin, die besagte getriebliche Kopplung zwischen dem Eingeben einer Datenkarte und dem Betätigen eines Schließelementes derart zu gestalten, daß einerseits sowohl eine hohe Funktionssicherheit gegeben als auch die Möglichkeit manipulierend in die getriebliche Verbindung eingreifen zu können weitestgehend vermieden ist, andererseits die angestrebte Funktion mit einem möglichst geringen Aufwand und mit für die Großserie geeigneten Mitteln erzielt wird.

Das Lösungsprinzip beschreibt der Schutzanspruch 1. Vorteilhafte Ausgestaltungen der Erfindung gehen aus den Unteransprüchen hervor.

Die Erfindung löst die gestellte Aufgabe mit einer besonders geringen Anzahl von auf einfache Weise montierbaren sowie raumsparend ausgebildeten und angeordneten Bauteilen. Dabei ist insbesondere die Art und Weise der getrieblichen Verbindung mittels einer Schubstange und die Integration dieses Getriebeelementes in das Lese-/Schreibaggregat, das heißt, die unmittelbare und in geeigneter Weise verschachtelte Lagerung der Schubstange an einer der beiden den Führungsschacht bildenden Wangen, hervorzuheben. Ein weiterer Vorzug der gefundenen Lösung stellt das unmittelbare Zusammenwirken der Schubstange mit einer Datenkarte beziehungsweise deren Träger sowie die selbstsichernde Verriegelung der Schubstange und somit des Schließelementes in der Lese-/Schreibposition einer Datenkarte dar. Gleichzeitig liefert eine mit der Schubstange zusammenwirkende Lichtschranke ein die Lese-/Schreibposition kennzeichnendes Signal beziehungsweise ein Signal, das belegt, daß die Eingabe-/Ausgabeöffnung geschlossen ist.

Im folgenden sei die Erfindung anhand der beigefügten Zeichnungen näher erläutert.

Es zeigen:
- Figur 1: eine Draufsicht einer von umgebenden Bauteilen eines Gerätes freigemachten, gattungsgemäßen Anordnung,
- Figur 2: eine vergrößerte Teildarstellung gemäß Figur 1 mit Freischnitten und mit einer das betreffende Lese-/Schreibaggregat tragenden Leiterplatte,

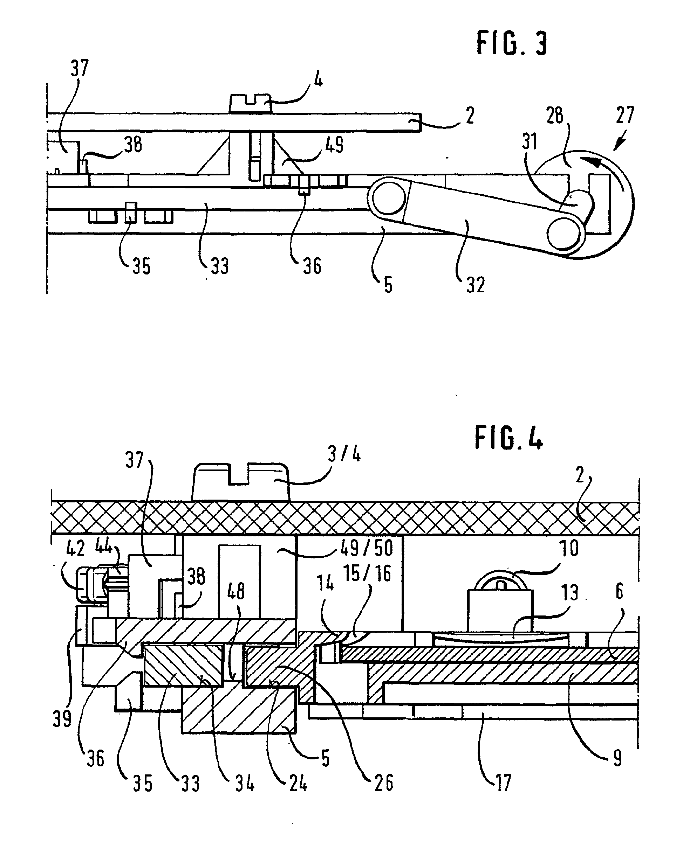

- Figur 3: eine teilweise dargestellte Seitenansicht der gattungsgemäßen Anordnung,
- Figur 4: eine Teilschnittdarstellung gemäß der Schnittlinie A in Figur 1 mit zugeordneter Leiterplatte.

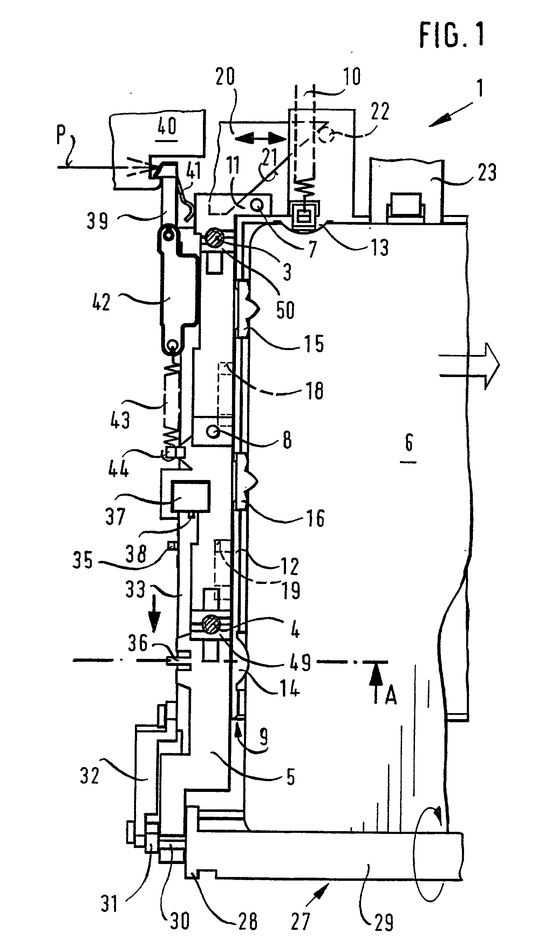

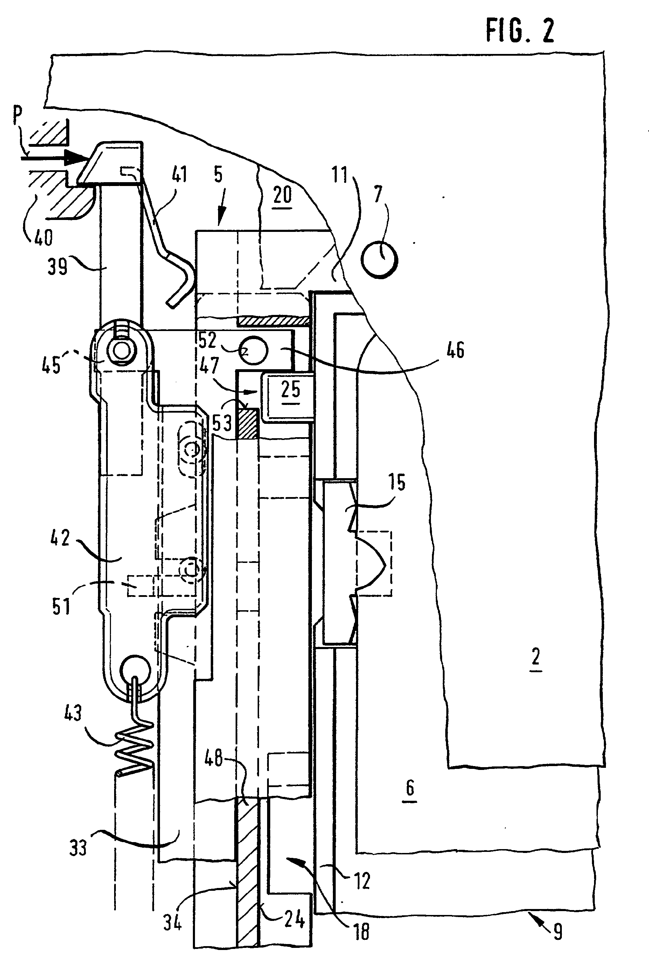

Die Draufsicht, Figur 1, zeigt die Seite eines Lese-/Schreibaggregates 1, welche beispielsweise der Unterseite einer Leiterplatte 2 (Figur 2) zugewandt ist. Die Leiterplatte 2 ist in Figur 1 der Übersichtlichkeit halber weggebrochen; es sind lediglich die Schäfte zweier Schrauben 3, 4 mit denen eine von zwei Wangen 5 des den Datenkarten 6 zugeordneten, nicht bezeichneten Führungsschachtes an der Leiterplatte 2 befestigt ist, geschnitten dargestellt. Mit 7, 8 sind an der Wange 5 ausgebildete, in die Leiterplatte 2 eingreifende Richtzapfen bezeichnet. Dem Transport der Datenkarten 6 dient bei dem gewählten Ausführungsbeispiel ein Schlitten 9, der in einer im folgenden noch zu beschreibenden Weise zwischen den Wangen 5 beziehungsweise im Führungsschacht gelagert ist und Mittel zum Haltern und Festspannen von Datenkarten 6 umfaßt. Dem Schlitten 9 ist ein Kippsprungwerk zugeordnet, welches einerseits beim Eingeben einer Datenkarte 6 andererseits durch Betätigen eines Datenkarten-Ausgabeschalters eine Transportfunktion auslöst und welches zwei stabile Lagen des Schlittens 9 nämlich die Lese-/Schreibposition und die Eingabe-/Entnahmeposition der Datenkarten 6 bewirkt. Das Kippsprungwerk als solches ist, weil nicht Erfindungsrelevant, nicht im einzelnen dargestellt. Mit 10 ist eine Zugfeder bezeichnet, die an dem Schlitten 9 angreift und ihn in die Lese-/Schreibposition bewegt, sofern er nicht in der Eingabe-/Entnahmeposition verriegelt ist. In dem in Figur 1 dargestellten Zustand befindet sich die Datenkarte 6 in der Lese-/Schreibposition. Das heißt, der Schlitten 9 liegt unter der Wirkung der Zugfeder 10, an Armen 11 an, welche an den Wangen 5 ausgebildet sind.

Von den Mitteln zum Haltern und Festspannen dient ein am Schlitten 9 bis auf die Frontseite umlaufend ausgebildeter Rahmen 12 den Datenkarten 6 als Fassung. Ferner sind mehrere Niederhalter vorgesehen von denen in Figur 1 zwei, 13 und 14, sichtbar sind. Greifer 15 und 16, die im Zusammenwirken mit dem Rahmen 12 die Datenkarte 6 in Pfeilrichtung auf dem Schlitten 9 festhalten, sind an einem quer zum Schlitten 9 beweglichen Schieber 17 (Figur 4) angeformt. Letzterer ist als Teil des Kippsprungwerkes auf dem Schlitten 9 gefedert gelagert und hält, wie bereits erwähnt und in Figur 1 dargestellt, in der einen stabilen Stellung eine auf dem Schlitten 9 befindliche Datenkarte 6 durch seitliches Greifen fest. In der anderen stabilen Stellung, die der Eingabe-/Entnahmeposition des Schlittens 9 entspricht, wirken die Greifer 15, 16 im Sinne einer Verriegelung des Schlittens 9 mit in der Wange 5 ausgebildeten Ausnehmungen 18 und 19 zusammen. Ein Schubglied 20, welches motorisch betätigt wird, dient, indem es über eine Gleitfläche 21 an einem dem Schlitten 9 zugeordneten Stift 22 angreift, dem Verschieben des Schlittens 9 in die Eingabe-/Entnahmeposition. Eine zusätzliche Bewegung des Schubgliedes 20 löst nachfolgend das Kippsprungwerk aus, wobei es auf einen an dem Schlitten 9 verschiebbar gelagerten Schieber 23 einwirkt. Der Vollständigkeit halber sei an dieser Stelle noch erwähnt, daß der Schlitten 9 in in den Wangen 5 ausgebildeten Nuten 24 geführt ist, wobei einzelne an dem Schlitten 9 ausgebildete Leistenelemente in die Nuten 24 eingreifen. Ein Leistenelement ist in Figur 2 mit 25, ein weiteres in Figur 4 mit 26 bezeichnet.

In der in Figur 1 dargestellten Lese-/Schreibposition des Schlittens 9 ist die nicht dargestellte Eingabe-/Ausgabeöffnung des betreffenden Gerätes unzugänglich verschlossen. Hierzu dient ein Schließelement 27, welches als segmentierte Trommel mit wenigstens einem zwischen Flanschen 28 ausgebildeten Zylindersegment 29 in den Wangen 5 drehbar gelagert ist. An den Lagerzapfen 30 des Schließelementes 27 ist jeweils eine Kurbel 31 angeformt, um das Schließelement 27 fallweise an der einen oder an der anderen Seite antreiben zu können. Mit einer der Kurbeln 31 ist eine Schubkurbel 32 gelenkig verbunden, die in getrieblicher Verbindung mit einer Schubstange 33 steht. Letztere ist unmittelbar an der Wange 5 gehaltert und in geeigneter Weise verschiebbar geführt. Das heißt, für die Führung der flachprofiliert ausgebildeten Schubstange 33 ist einerseits eine Nut 34 (Figur 2) vorgesehen andererseits sind an der Wange 5 wechselweise nicht bezeichnete Konsolen angeformt, innerhalb denen die Schubstange 33 umgreifende Sicherungshaken freigestellt sind. Die beiden in Figur 1 dargestellten Sicherungshaken sind mit 35 und 36 bezeichnet. 37 stellt ein an der Wange 5 befestigtes Gehäuse einer Lichtschranke dar. Eine die Lichtschranke betätigende Fahne 38 ist an der Schubstange 33 angeformt. Auf der Schubstange 33 ist ferner ein gemäß Figur 2 zweiarmiger Riegel 39 gelagert, der mit einem ortsfesten, beispielsweise an der Leiterplatte 2 befestigten Bauteil 40 zusammenwirkt und unter der Wirkung einer Feder 41 steht. Die axiale Sicherung der Lagerung des mit zwei nicht bezeichneten Lagerzapfen versehenen Riegels 39 erfolgt mittels eines auf der Schubstange 33 befestigten Halters 42, welcher zusätzlich der Halterung des einen Endes einer der Schubstange 33 zugeordneten Zugfeder 43 dient. Das andere Ende der Zugfeder 43 ist an einem an der Wange 5 angeformten Finger 44 eingehängt. Ein Lösen der Verriegelung zwischen dem Riegel 39 und dem Bauteil 40 und somit eine Freigabe der Eingabe-/Ausgabeöffnung des Lese-/Schreibaggregates muß unmittelbar vor der Freigabe einer Datenkarte 6 vorgenommen werden, so daß der Antrieb eines durch den Pfeil P symbolisierten Betätigungselementes zweckmäßigerweise synchron mit dem Antrieb des Schubgliedes 20 erfolgen sollte. Wie insbesondere aus der Figur 2 ersichtlich ist, ist die Schubstange 33 an ihrem einen Ende T-förmig ausgebildet. Dabei ist an dem einen Schenkel 45 des "Querbalkens" der Riegel 39 gelagert, der andere Schenkel 46 greift durch eine Öffnung 47 in der zwischen den Nuten 24 und 34 bestehenden Trennwand 48 der Wange 5 in die Nut 24 und somit in den Bewegungsweg des Schlittens 9 beziehungsweise des Leistenelementes 25 ein. Mit 49 und 50 sind an der Wange 5 angeformte, für Schraubverbindungen mit der Leiterplatte 2 geeignet ausgebildete Pfeiler bezeichnet. Ein Dritter, der Schubstange 33 zugeordneter Sicherungshaken 51 ist in der Figur 2 dargestellt. Eine mit 52 bezeichnete Bohrung ist vorgesehen, um den Riegel 39 spiegelbildlich lagern und somit auch die Schubstange 33 der einen oder der anderen Wange 5 eines Lese-/Schreibaggregates zuordnen zu können. Der Vollständigkeit halber sei noch erwähnt, daß anstatt des trommelförmigen Schließelementes 27 ein anders gestaltetes Schließelement, beispielsweise ein flacher Schieber oder eine schwenkbare Klappe vorgesehen werden können. Wesentlich ist, daß das Schließelement in einer geeigneten getrieblichen Verbindung mit der Schubstange 33 steht.

Im folgenden sei die Funktion der erfindungsgemäßen Anordnung näher erläutert:

Nach dem Eingeben einer Datenkarte 6 in das Lese-/Schreibaggregat 1, das heißt, dem Aufschieben der Datenkarte 6 auf den Schlitten 9 und dem nachfolgenden Verschieben des Schlittens 9 mittels der eingesteckten Datenkarte 6 erfolgt beim Erreichen des Kippunktes des Kippsprungwerkes unter der Wirkung der Zugfeder 10 der selbsttätige Transport der eingegebenen Datenkarte 6 in die Lese-/Schreibposition, bei der sich der Schlitten 9 in der in den Figuren 1 und 2 dargestellten Lage befindet. Während der Bewegung des Schlittens 9 wird die Schubstange 33, indem das Leistenelement 25 des Schlittens 9 mit dem an der Schubstange 33 angeformten Schenkel 46 in Wirkverbindung tritt, mitgenommen. Dabei geht der Riegel 39 in Eingriff mit dem ortsfesten Bauteil 40. Andererseits wird mit dem Betätigen der Schubstange 33 über die Schubkurbel 32 und die Kurbel 31 das Schließelement 27 derart verschwenkt, daß die Eingabe-/Ausgabeöffnung des Lese-/Schreibaggregates 1 durch das Zylindersegment 29 abgedeckt ist. Diese Anordnung einer selbstsichernden getrieblichen Verbindung zwischen dem Schließelement 27 und den Transportmitteln der Datenkarten 6 macht ein in betrügerischer Absicht versuchtes Verdrehen des Schließelementes 27 von außen unmöglich.

Soll eine eingegebene Datenkarte 6 wieder ausgegeben werden, wird aufgrund einer Tastenbetätigung der Antrieb des Schubgliedes 20 aktiviert. Während des Verschiebens des Schlittens 9 durch das Schubglied 20 erfolgt vor Erreichen der Eingabe-/Entnahmeposition des Schlittens 9 die Freigabe der Schubstange 33 und vorzugsweise gleichzeitig auch eine Betätigung des Riegels 39 in Pfeilrichtung P. Nach der Freigabe der Verriegelung erfolgt, verursacht durch die Zugfeder 43, ein Verschieben der Schubstange 33 und somit ein Drehen des Schließelementes 27 im Sinne eines Öffnens der Eingabe-/Ausgabeöffnung. Die Offen-Stellung des Schließelementes 27 ist bei der vorgesehenen Anordnung durch die dem Schenkel 46 der Schubstange 33 als Anschlag dienende Trennwand 48 der Wange 5, an deren Stirnfläche 53 der Schenkel 46 der Schubstange 33 unter der Wirkung der Zugfeder 43 anliegt, bestimmt.

## Patentansprüche

1. Anordnung zum Betätigen eines der Eingabe-/Ausgabeöffnung eines Lese-/Schreibaggregates (1) für Datenkarten (6) zugeordneten Schließelementes (27), wobei das Lese-/Schreibaggregat(1) einen von Wangen (5) seitlich begrenzten Führungsschacht aufweist, innerhalb dessen die Datenkarten (6) zwischen einer Eingabe-/Entnahmeposition und einer Lese-/Schreibposition selbsttätig transportiert werden, und wobei eine mit dem Schließelement (27) getrieblich verbundene Schubstange (33) vorgesehen ist, die Schubstange (33) in den Bewegungsraum der Datenkarten (6) eingreift und an der Schubstange (33) eine in Richtung der Eingabe-/Ausgabeöffnung wirkende Zugfeder (43) angreift, **dadurch gekennzeichnet, dass** die Schubstange (33) an einer Wange (5) verschiebbar gehaltert ist und dabei an der Wange (5) derart unmittelbar gelagert ist, dass zwischen der Wange (5) und der Schubstange (33) eine Steg-Schlitz-Verbindung vorgesehen ist und dass an der Wange (5) angeformte Sicherungshaken (35, 36, 51) indem diese die Schubstange (33) umgreifen als Führungselemente dienen.

2. Anordnung nach Anspruch 1, **dadurch gekennzeichnet, dass** zwischen den Wangen (5) ein in Nuten (24) gelagerter, der Aufnahme der Datenkarten (6) dienender Schlitten (9) angeordnet ist und dass ein an der Schubstange (33) ausgebildeter Schenkel (46) durch eine Öffnung (47) in der die Schubstange (33) lagernden Wange (5) in die wangengleiche Nut (24) des Schlittens (9) eingreift.

3. Anordnung nach einem der vorhergehenden Ansprüche, **dadurch gekennzeichnet, dass** das Schließelement (27)als segmentierte Trommel ausgebildet ist, dass an einem der Lagerzapfen (30) der Trommel eine Kurbel (31) angeformt ist und dass die Schubstange (33) mittels einer Schubkurbel (32) mit der Kurbel (31) gelenkig verbunden ist.

4. Anordnung nach einem der vorhergehenden Ansprüche, **dadurch gekennzeichnet, dass** auf der Schubstange (33) ein Riegel (39) gefedert gelagert ist, dass bei geschlossener Eingabe-/Ausgabeöffnung des Lese-/Schreibaggregates die Schubstange (33) verriegelt ist und dass beim Lösen der Verriegelung die an der Schubstange (33) angreifende Zugfeder (43) ein Verschwenken des Schließelementes (27) bewirkt.

## Claims

1. Arrangement for actuating a closing member (27) assigned to the input/output opening of a reading/writing unit (1) for data cards (6), whereby the reading/writing unit (1) encompasses a guide shaft laterally bounded by flanks (5), within which the data cards (6) are automatically transported between an input/removal position and a reading/writing position, and whereby a push rod (33) that is in gear connection with the closing member (27) is provided, the push rod (33) engages in the movement space of the data cards (6) and a tension spring (43) acting in the direction of the input/output opening engages on the push rod (33),
**characterised in that** the push rod (33) is secured on a flank (5) so as to be displaceable and is at the same time directly supported on the flank (5) in such a manner that a pin-slit connection is provided between the flank (5) and the push rod (33), and **in that** securing hooks (35, 36, 51) moulded on the flank (5) serve as guide members **in that** they encompass the push rod (33).

2. Arrangement according to Claim 1,
**characterised in that** a carriage (9) which is supported in grooves (24) and serves for accommodating the data cards (6) is disposed between the flanks (5), and **in that** a leg (46) configured on the push rod (33) engages through an opening (47) in the flank (5) that supports the push rod (33) into the groove (24) of the carriage (9) that has equal flanks.

3. Arrangement according to one of the preceding claims,
**characterised in that** the closing member (27) is configured as a segmented drum, **in that** a crank (31) is moulded on one of the support pins (30) of the drum and **in that** the push rod (33) is connected to the crank (31) in an articulated manner by means of a slider crank (32).

4. Arrangement according to one of the preceding claims,
**characterised in that** a bolt (39) is spring-mounted on the push rod (33), **in that** the push rod (33) is locked when the input/output opening of the reading/writing unit is closed, and **in that** the tension spring (43) engaging on the push rod (33) causes the closing member (27) to pivot when the interlock is released.

## Revendications

1. Dispositif permettant d'actionner un organe d'obturation (27) affecté à l'orifice d'introduction et de restitution d'un groupe de lecture et écriture (1) pour cartes à puces (6), où le groupe de lecture et écriture (1) comporte un logement de guidage limité latéralement par des joues (5) à l'intérieur duquel les cartes à puces (6) sont transportées automatiquement entre une position d'introduction et restitution et une position de lecture et écriture et où il est prévu une bielle (33) en liaison d'entraînement avec l'élément obturateur (27), où la bielle (33) intervient dans l'espace de déplacement des cartes à puces (6) et où un ressort de traction (43) agissant dans la direction de l'orifice d'introduction et restitution agit sur la bielle (33), **caractérisé par le fait que** la bielle (33) est maintenue en translation sur une joue (5) et est suspendue, en même temps, directement sur la joue (5), de telle manière que, entre la joue (5) et la bielle (33), il est prévu un lien barrette-fente et que des crochets de sécurité (35, 36, 51) ménagés sur la joue (5) servent d'éléments de guidage **par le fait que** ceux-ci entourent la bielle (33).

2. Dispositif selon la revendication 1, **caractérisé par le fait que**, entre les joues (5), est disposé un chariot (9) suspendu dans des rainures (24) et servant à prendre en charge les cartes à puces (6) et qu'une branche (46) ménagée sur la bielle (33) intervient, à travers une ouverture (47) dans la joue (5) supportant la bielle (33), dans la rainure (24) du chariot (9) correspondant à la même joue.

3. Dispositif selon l'une des revendications précédentes, **caractérisé par le fait que** l' élément obturateur (27) est conçu sous la forme d'un tambour segmenté, que, sur l'un des tourillons (30) du tambour, une manivelle (31) est ménagée et que la bielle (33) est liée d'une façon articulée, au moyen d'une manivelle de poussée (32), à la manivelle (31).

4. Dispositif selon l'une des revendications précédentes, **caractérisé par le fait que**, sur la bielle (33), est monté un verrou (39) d'une façon élastique, que, si l'orifice d'introduction et restitution du groupe de lecture et écriture est fermé, la bielle (33) est verrouillée et que, lors de la libération du verrouillage, le ressort de traction (43) agissant sur la bielle (33), provoque un pivotement de l'élément obturateur (27).
